Europäisches Patentamt

(19) European Patent Office

Office européen des brevets

(11) Veröffentlichungsnummer: **0 074 593**
B1

(12) **EUROPÄISCHE PATENTSCHRIFT**

(45) Veröffentlichungstag der Patentschrift:
31.07.85

(21) Anmeldenummer: 82108181.7

(22) Anmeldetag: 17.12.79

(60) Veröffentlichungsnummer der früheren Anmeldung
nach Art. 76 EPÜ:

(51) Int. Cl.⁴: **C 08 J 9/14** // (C08J9/14,
C08L61:28)

(54) **Elastischer Schaumstoff auf Basis eines Melamin/Formaldehyd-Kondensationsproduktes.**

(30) Priorität: 17.04.79 DE 2915457

(43) Veröffentlichungstag der Anmeldung:
23.03.83 Patentblatt 83/12

(45) Bekanntmachung des Hinweises auf die Patenterteilung:
31.07.85 Patentblatt 85/31

(84) Benannte Vertragsstaaten:
BE CH DE FR GB IT NL SE

(56) Entgegenhaltungen:
Keine Entgegenhaltungen.

(73) Patentinhaber: BASF Aktiengesellschaft,
Carl-Bosch-Strasse 38, D-6700 Ludwigshafen (DE)

(72) Erfinder: Mahnke, Harald, Dr., Osloer Weg 48,
D-6700 Ludwigshafen (DE)
Erfinder: Woerner, Frank Peter, Dr., Am Altenbach 18,
D-6706 Wachenheim (DE)
Erfinder: Weber, Heinz, Dr., Am Wehrhaus 26,
D-6718 Gruenstadt (DE)

## Beschreibung

Schaumstoffe werden für verschiedenartige Zwecke, insbesondere im Bauwesen zur Wärme- und Schalldämmung eingesetzt. Die gebräuchlichsten Schaumstoffe sind solche auf Basis von thermoplastischen Kunststoffen, vor allem von Styrolpolymerisaten. Diese haben eine hervorragende Dämmwirkung und weisen gute mechanische Eigenschaften auf, aufgrund des thermoplastischen Charakters von Polystyrol zeigen sie jedoch eine geringe Wärmeformbeständigkeit, die unter 100° C liegt. Darüber hinaus sind sie leicht entflammbar; eine Verbesserung des Brandverhaltens läßt sich nur durch Zusatz von halogenhaltigen Flammschutzmitteln erreichen, was jedoch wegen der Beeinträchtigung der Verarbeitungseigenschaften und der möglichen Bildung von Halogenwasserstoffen keine optimale Lösung darstellt. Ähnliches gilt für Polyurethan-Hartschäume, die zwar auch gute mechanische und Dämm-Eigenschaften haben, jedoch ein ungünstiges Brandverhalten aufweisen und im Brandfall toxische Rauchgase entwickeln. Auch duroplastische Harnstoffharze werden zu Schaumstoffen verarbeitet. Diese haben den Vorteil einer günstigen Rohstoffbasis; sie sind jedoch sehr spröde und rißanfällig und zeigen ebenfalls ein ungünstiges Brandverhalten.

Schaumstoffe auf Basis von Melamin/Formaldehyd-Kondensationsprodukten sind zwar schon verschiedentlich in der Patentliteratur beschrieben worden, sie wurden jedoch bisher im Bauwesen zur Wärme- und Schalldämmung noch nicht in technischem Maßstab eingesetzt. Sie werden hergestellt durch Einrühren von Luft in eine wäßrige Melaminharzlösung, welche einen Emulgator und ein Härtungsmittel enthält. Solche Schaumstoffe, wie sie z. B. in der DE-PS 870 027 beschrieben werden, haben den schwerwiegenden Nachteil, daß sie sehr hart und spröde sind und bei der Handhabung leicht brechen bzw. bröseln. Nach der FR-PS 1 073 642 sollen Melaminharz-Schäume hergestellt werden können durch Erhitzen von pulverförmigem Harz unter Vakuum in einer Form. Man erhält jedoch mit diesem Verfahren keine brauchbaren elastischen Schaumstoffe. In der US-PS 3 093 600 sind Melaminharz-Schäume beschrieben, die durch Einbau von Triolen, beispielsweise Trimethylolpropan eine verbesserte Elastizität und Rißfestigkeit erhalten sollen. Es zeigt sich aber, daß die Elastizität und vor allem die Wiedererholung beim Stauchen solcher Schaumstoffe für viele Anwendungszwecke nicht ausreicht. Außerdem verschlechtert sich beim Einbau größerer Mengen an Triolen das Brandverhalten der Schaumstoffe erheblich. In der US-PS 3 063 953 ist ein Verfahren zur Verbesserung der mechanischen Festigkeit, Elastizität und Weichheit von Aminoplastharz-Schäumen, vorzugsweise solchen auf Basis von Harnstoffharzen beschrieben. Mit diesem Verfahren kann man bei Melaminharz-Schäumen, die nach dem Stand der Technik hergestellt wurden, die genannten Eigenschaften zwar etwas, jedoch nicht entscheidend verbessern. Vor allem die Zugfestigkeit solcher Schaumstoffe ist viel zu gering.

Der Erfindung lag die Aufgabe zugrunde, Schaumstoffe auf Basis von Melamin/Formaldehyd-Kondensationsprodukten bereitzustellen, die bei der Anwendung als Dämmstoffe den Anforderungen genügen, die in der Bauindustrie an solche Materialien gestellt werden. Insbesondere sollen sie gute mechanische Eigenschaften aufweisen, d. h., elastisch, stabil und leicht handhabbar sein. Darüber hinaus sollen sie ein gutes Brandverhalten zeigen, d. h. nach DIN 4102 mindestens normalentflammbar, vorzugsweise aber schwerentflammbar sein.

Es wurde nun gefunden, daß offenzellige Schaumstoffe auf Basis eines Melamin/Formaldehyd-Kondensationsproduktes, welches mindestens 50 Gew.-% Melamin und Formaldehyd-Einheiten einkondensiert enthält, und bis zu 50 Gew.-% andere amino- amid-, hydroxyl- oder carboxylgruppenhaltige Duroplastbildner einerseits und Aldehyde andererseits einkondensiert enthalten kann, dann genügend elastisch sind, wenn ihr Schaumgerüst aus einer Vielzahl miteinander verbundener dreidimensional verzweigter Stege besteht, deren mittleres Länge : Dicke-Verhältnis größer ist als 10 : 1 und deren Dichte größer ist als 1,1 g · cm$^{-3}$.

Die erfindungsgemäßen Schaumstoffe weisen folgende Produkteigenschaften auf:

a) die Rohdichte nach DIN 53 420 liegt zwischen 6 und 60 und insbesondere zwischen 8 und 40 [g · l$^{-1}$];

b) die Wärmeleitzahl nach DIN 52 612 ist kleiner als 0,06, vorzugsweise kleiner als 0,05 und insbesondere kleiner als 0,04 [W · m$^{-1}$ · °K$^{-1}$];

c) die Stauchhärte nach DIN 53 577 bei 60% Stauchung, dividiert durch die Rohdichte liegt unter 0,3, vorzugsweise unter 0,2 [N · cm$^{-2}$/g · l$^{-1}$], wobei bei der Bestimmung der Stauchhärte bei 60% Stauchung eine Wiedererholung des Schaumstoffs auf mindestens 70%, vorzugsweise mindestens 80% und insbesondere mindestens 90% seiner ursprünglichen Abmessung erfolgen muß;

d) der Elastizitätsmodul in Anlehnung an DIN 53 423, dividiert durch die Rohdichte liegt unter 0,25, vorzugsweise unter 0,2 und insbesondere unter 0,15 [N · mm$^{-2}$/g · l$^{-1}$];

e) der Biegeweg beim Bruch nach DIN 53 423 ist größer als 6, vorzugsweise größer als 9 und insbesondere größer als 12 [mm];

f) sie sind nach DIN 4102 mindestens normalentflammbar, vorzugsweise schwerentflammbar;

g) die Zugfestigkeit nach DIN 53 571 beträgt vorzugsweise mindestens 0,07, insbesondere mindestens 0,1 N · mm$^{-2}$.

2

0 074 593

Durch die Erfindung werden erstmals technisch brauchbare Schaumstoffe auf Basis von Melamin/ Formaldehyd-Kondensationsprodukten für den Einsatz im Bauwesen bereitgestellt. Sie haben nicht nur hervorragende Wärmedämmeigenschaften aufgrund ihrer niedrigen Dichte und ihrer geringen Wärmeleitzahl; wegen ihrer Offenzelligkeit eignen sie sich auch gut zur Schalldämmung. Gegenüber allen anderen üblichen organischen Schaumkunststoffen haben sie den Vorteil, daß sie auch ohne Zusatz von Flammschutzmitteln nach DIN 4102 normalentflammbar, in den weitaus meisten Fällen sogar schwerentflammbar sind. Im Brandfall verkohlt der Schaumstoff ohne zu schmelzen und dabei abzutropfen; er verlöscht sofort, wenn man die Flamme entfernt. Da die Ausgangsstoffe für die Herstellung von Melaminharzen $CO_2$, $NH_3$ und $CH_3OH$ sind, hat man hier einen Schaumstoff, der unabhängig ist von Rohstoffen auf Erdöl-Basis.

Bei einer mikroskopischen Betrachtung der erfindungsgemäßen Schaumstoffe zeigt es sich, daß das Schaumgerüst eine Vielzahl miteinander verbundener, dreidimensionalverzweigter Stege enthält (siehe Abbildung). Melaminharzschäume sind nur dann ausreichend elastisch, wenn die Stege folgende Bedingungen erfüllen:

1. Das mittlere Länge : Dicke-Verhältnis muß größer als 10 : 1, vorzugsweise größer als 12 : 1 und insbesondere größer als 15 : 1 sein.

2. Die Dichte der Stege muß größer als 1,10, vorzugsweise größer als 1,20 und insbesondere größer als 1,30 g/cm$^3$ sein.

Zu kurze Stege (mit zu geringem l : d-Verhältnis) erhält man, wenn der Härtungsvorgang zu früh einsetzt bevor der Schäumvorgang im wesentlichen beendet ist. Eine zu niedrige Stegdichte deutet darauf hin, daß sich im Inneren der Stege kleine Hohlräume, Blasen, befinden, die von einer Sekundärschäumung herrühren. Eine solche Sekundärschäumung tritt ein, wenn der Wassergehalt des Melaminharz-Vorkondensats zu hoch war. In beiden Fällen werden spröde Schaumstoffe erhalten.

Das mittlere l : d-Verhältnis wird mikroskopisch bestimmt, wobei die Steglänge und -dicke nach einem statistischen Auszählverfahren ermittelt werden. Als Steglänge ist der Abstand zwischen den Mittelpunkten zweier Knotenstellen und als Stegdicke die Dicke an der schmalsten Stelle eines Stegs, jeweils gemessen an der mikroskopischen Aufnahme, definiert. Zur Bestimmung der Dichte der Schaumstoffstege wird der Schaumstoff in eine geeignete Flüssigkeit, z. B. Isopropanol, gelegt, mit der er sich auf Grund seiner Offenzelligkeit vollsaugt. Die Dichte der Stege wird dann nach dem archimedischen Prinzip bestimmt.

Bei den erfindungsgemäßen Schaumstoffen handelt es sich um Melamin/Formaldehyd-Kondensationsprodukte, die neben Melamin bis zu 50, vorzugsweise bis zu 20 Gew.-% anderer Duroplastbildner, und neben Formaldehyd bis zu 50, vorzugsweise bis zu 20 Gew.-% anderer Aldehyde einkondensiert enthalten können. Besonders bevorzugt ist ein unmodifiziertes Melamin/Formaldehyd-Kondensationsprodukt. Als Duroplastbildner kommen beispielsweise in Frage: alkylsubstituiertes Melamin, Harnstoff, Urethane, Carbonsäureamide, Dicyandiamid, Guanidin, Sulfurylamid, Sulfonsäureamide, aliphatische Amine, Phenol und dessen Derivaten. Als Aldehyde können z. B. Acetaldehyd, Trimethylolacetaldehyd, Acrolein, Benzaldehyd, Furfurol, Glyoxal, Phthalaldehyd und Terephthalaldehyd eingesetzt werden. Weitere Einzelheiten über Melamin/Formaldehyd-Kondensationsprodukte finden sich in Houben-Weyl, Methoden der organischen Chemie, Band 14/2, 1963, Seiten 319 bis 402. Das Molverhältnis Duroplastbildner : Aldehyd kann in weiten Grenzen zwischen 1 : 1,5 und 1 : 4,5 schwanken; im Falle von Melamin/Formaldehyd-Kondensaten liegt es vorzugsweise zwischen 1 : 2,5 und 1 : 3,5.

Die erfindungsgemäßen Schaumstoffe können bis zu 50, vorzugsweise bis zu 20 Gew.-% üblicher Zusatzstoffe enthalten. In Frage kommen beispielsweise faser- oder pulverförmige anorganische Verstärkungsmittel oder Füllstoffe, wie Glasfasern, Metallpulver, Metalloxide, Metallsalze oder Silikate, z. B. Talkum, Kaolin, Quarz, Schwerspat oder Kreide; ferner Pigmente und Farbstoffe; Flammschutzmittel, wie halogen- oder phosphorhaltige organische Verbindungen; Weichmacher, wie Triole, z. B. Trimethylolpropan, oder Acrylate; Hydrophobierungsmittel, wie z. B. Alkylphenole; Mittel zur Herabsetzung der Brandgastoxizität, wie z. B. Verbindungen des dreiwertigen Bors, des zweiwertigen Kupfers und des dreiwertigen Eisens oder zur Förderung der Verkohlung, wie z. B. Saccharose. Es ist aber auf jeden Fall bevorzugt, ohne derartige Zusatzstoffe auszukommen. Es ist bekannt, daß z. B. Weichmacher das Brandverhalten verschlechtern; sie werden daher nur in solchen Fällen zugesetzt, wo besonderer Wert auf sehr flexible Schäume gelegt wird. Hierbei kann es dann notwendig werden, Flammschutzmittel zuzusetzen, auf die im Normalfall, vor allem bei unmodifizierten Melamin/Formaldehyd-Kondensaten verzichtet werden kann. Da die Schaumstoffe offenporig sind und deshalb Wasser aufnehmen können, kann es für manche Anwendungszwecke notwendig sein, Hydrophobierungsmittel in Mengen von 0,2 bis 5 Gew.-% zuzusetzen.

Die erfindungsgemäßen Schaumstoffe zeichnen sich durch ihre extrem niedrige Rohdichte aus, die auf bis zu 4 [g · l$^{-1}$] heruntergehen kann. Dies hat zur Folge, daß die Schaumstoffe von den Einsatzstoff-Kosten her sehr billig sind. Höhere Dichten bis zu 80 [g · l$^{-1}$] sind nur für besondere Anwendungszwecke, z. B. bei Verbundmaterialien interessant. Vorzugsweise liegt die Rohdichte zwischen 6 und 60, insbesondere zwischen 8 und 40 [g · l$^{-1}$]. Die Wärmeleitzahl bei 10°C ist kleiner als 0,06, vorzugsweise kleiner als 0,05 und insbesondere kleiner als 0,04 [W · m$^{-1}$ · °K$^{-1}$]. Sie ist damit günstiger als bei Polyurethan-Weichschäumen und liegt in der Größenordnung von Polystyrol-Schaumstoffen.

3

Die günstigen mechanischen Eigenschaften werden durch die Stauchhärte, den Elastizitätsmodul, den Biegeweg beim Bruch und die Zugfestigkeit ausgedrückt. Der Elastizitätsmodul wird in Anlehnung an DIN 53 423 bestimmt, wobei die Prüfgeschwindigkeit 5 [mm · min $^{-1}$] beträgt und die Messung bis zu einer maximalen Durchbiegung von 0,5 mm durchgeführt wird. Dabei ändern sich die Stauchhärte und der Elastizitätsmodul in etwa proportional zur Dichte, so daß zur Charakterisierung der Quotient Stauchhärte durch Rohdichte bzw. Elastizitätsmodul durch Rohdichte herangezogen wird. Ein anwendungstechnisch sehr wichtiges Merkmal der erfindungsgemäßen Schaumstoffe ist die Wiedererholung bei der Stauchung. Sie wird bei der Bestimmung der Stauchhärte gemessen und beträgt bei 60% Stauchung mindestens 70%, vorzugsweise mindestens 80% und insbesondere mindestens 90%. Es fällt dabei auf, daß bei frisch hergestelltem Schaumstoff die erste Stauchung sich deutlich von den nachfolgenden abhebt: Hier ist eine etwas größere Kraft zum Stauchen erforderlich, was offenbar darauf zurückzuführen ist, daß Reste von harten Bereichen im Zellgerüst zerstört werden. Durch Walken der Schaumstoffe werden die harten Bereiche zerstört. Eine ebenfalls sehr wichtige Eigenschaft ist das Brandverhalten. Die Schaumstoffe sind nach DIN 4102 mindestens normalentflammbar, vorzugsweise aber schwerentflammbar. Die Normalentflammbarkeit beschränkt sich auf Ausnahmefälle, in denen z. B. Weichmacher zugesetzt oder modifizierende Aminoplastbildner, z. B. Harnstoff einkondensiert wurden.

Die erfindungsgemäßen Schaumstoffe können hergestellt werden durch Verschäumen einer wäßrigen Lösung oder Dispersion, welche ein Melamin/Formaldehyd-Vorkondensat, einen Emulgator, ein Treibmittel und einen Härter sowie gegebenenfalls übliche Zusatzstoffe enthält, und anschließendes Aushärten des Schaumes. Es hat sich gezeigt, daß besonders elastische Schaumstoffe dann erhalten werden, wenn man verhältnismäßig hochkonzentrierte, vorzugsweise über 68 gewichtsprozentige und insbesondere über 72 gewichtsprozentige Lösungen oder Dispersionen einsetzt (wobei sich die Konzentrationen auf die Mischung Harz und Wasser ohne Zusatzstoffe beziehen) und wenn man unter solchen Bedingungen verschäumt, daß zunächst nur ein geringer Viskositätsanstieg erfolgt und der Härtungsvorgang unter starker Viskositätserhöhung erst dann einsetzt, wenn der Schäumvorgang weitgehend beendet ist.

Als Emulgatoren kommen die üblichen nichtionogenen, anionenaktiven oder kationenaktiven organischen Verbindungen mit langkettigen Alkylresten in Frage. Als Treibmittel können flüchtige organische Verbindungen, wie Kohlenwasserstoffe oder Halogenkohlenwasserstoffe verwendet werden. Diese Treibmittel werden in der wäßrigen Lösung oder Dispersion gleichmäßig verteilt; beim Erhitzen verdampfen sie und bewirken das Aufschäumen. Man kann auch Gase unter Druck in die wäßrige Lösung oder Dispersion einpressen und das Verschäumen durch Entspannen herbeiführen. Schließlich ist es auch möglich, chemische Verbindungen, die unter Gasbildung reagieren oder sich zersetzen, einzumischen und die Reaktion bzw. Zersetzung durch Erhitzen hervorzurufen. Es werden die üblichen Härter verwendet, die bei Reaktionsbedingungen Protonen abspalten, welche die Weiterkondensation des Melaminharzes katalysieren. In Frage kommen anorganische und organische Säuren, latente Härter, sowie Lewis-Säuren.

Die Schaumstoffe können als Platten oder Bahnen mit einer Dicke bis zu etwa 50 cm hergestellt werden oder als Schaumfolien mit einer Dicke von wenigen Millimetern. Bei diskontinuierlicher Herstellungsweise können auch Formteile erhalten werden. Die Schaumstoffe können ein- oder beidseitig mit Deckschichten versehen oder kaschiert werden, z. B. mit Papier, Pappe, Glasvlies, Holz, Gipsplatten, Metall-Bleche oder -Folien, Kunststoff-Folien, die gegebenenfalls auch geschäumt sein können.

Das Hauptanwendungsgebiet der erfindungsgemäßen Schaumstoffe ist die Wärme- und Schalldämmung von Gebäuden und Gebäudeteilen, insbesondere von Zwischenwänden, aber auch von Dächern, Fassaden, Türen und Fußböden; weiterhin die Wärme- und Schalldämmung von Fahrzeugen und Flugzeugen, sowie die Tieftemperaturisolierung, z. B. von Kühlhäusern, Öltanks und Behälter für Flüssiggas. Weitere Anwendungsgebiete sind die Verwendung als isolierende Wandverkleidung, als isolierendes und stoßdämmendes Verpackungsmaterial sowie als Verbandsmaterial und wegen der schwammartigen Struktur auch als Reinigungsmaterial. Die Schaumstoffe sind auch als Trägermaterial für Pflanzensamen geeignet, z. B. für Grassamen, der darin fixiert wird. Als Rollenware lassen sie sich gut verlegen. Flocken der erfindungsgemäßen Schaumstoffe sind zur Auflockerung schwerer Böden, als feuchtigkeitsregulierendes Mittel und als Trägermaterial für Düngemittel einsetzbar.

Die in den Beispielen genannten Teile und Prozente beziehen sich auf das Gewicht, die Prozentangaben für Emulgator, Härter und Treibmittel sind immer auf das Gewicht des wasserfreien Melaminharzes bezogen.


Beispiel 1

In einem offenen Gefäß wird ein sprühgetrocknetes Melamin/Formaldehyd-Vorkondensat (Molverhältnis 1 : 3, Molekulargewicht etwa 500) zu einer wäßrigen Lösung mit 3% Ameisensäure und 1,5% des Natriumsalzes eines Gemisches von Alkylsulfonaten mit 12 bis 18 C-Atomen im Alkylrest (Emulgator K 30 der Fa. Bayer AG), wobei die Prozentzahlen auf das Melaminharz bezogen sind, gegeben. Die Konzentration des Harzes, bezogen auf die Mischung aus Harz und Wasser, betrug 74%. Die Mischung wurde kräftig gerührt, dann wurden 20% Pentan zugegeben. Es wurde so lange (etwa 3 Minuten lang) weitergerührt, bis eine homogene Dispersion entstand. Diese wurde auf ein teflonisiertes Glasgewebe als Trägermaterial aufgerakelt und in einem Trockenschrank, in dem eine Lufttemperatur von 150°C herrschte, aufgeschäumt und gehärtet. Dabei stellte sich als Massetemperatur im Schaum die Siedetemperatur des Pentans ein, die unter diesen Bedingungen bei 37,0°C liegt. Nach 7 bis 8 Minuten war die maximale Steighöhe des Schaums erreicht. Der Schaum wurde noch weitere 10 Minuten bei 150°C im Trockenschrank belassen; anschließend wurde er 30 Minuten lang bei 180°C getempert. Eigenschaften s. Tabelle 1.

## Beispiel 2

Es wurde gearbeitet wie in Beispiel 1, wobei aber statt 20% nur 13% Pentan eingesetzt wurden.

## Beispiel 3

Es wurde gearbeitet wie in Beispiel 1, wobei als Säure 3% Schwefelsäure, als Emulgator 1,5% Natriumdodecylbenzolsulfonat und als Treibmittel 28% Trichlortrifluoräthan eingesetzt wurden. Die Harzkonzentration betrug 76%. Die Massetemperatur beim Schäumen lag bei 47°C. Der Schaum wurde nicht getempert.

## Beispiel 4

Es wurde gearbeitet wie in Beispiel 1, wobei 6% Phosphorsäure, 1,5% Natriumlaurylsulfonat und 12% Pentan verwendet wurden. Es wurde ein Melaminharz eingesetzt, in dem das Molverhältnis Melamin : Formaldehyd 1 : 3,5 betrug. Die Harzkonzentration war 74%. Der Schaum wurde nicht getempert.

## Beispiel 5

In einem offenen Gefäß wurden zu einer Lösung eines Melaminharzes 2,8% Ameisensäure und 1,4% des Alkylsulfonats aus Beispiel 1, bezogen auf das Harz, zugesetzt. Die Konzentration des Harzes, bezogen auf die Mischung aus Harz und Wasser, betrug 75,5%. Unter kräftigem Rühren wurden 20% Pentan zugegeben. Das Schäumen, Aushärten und Tempern erfolgte wie in Beispiel 1.

## Beispiel 6

Es wurde gearbeitet wie in Beispiel 5, wobei ein Harz mit einem Molverhältnis Melamin : Formaldehyd von 1 : 2,5 eingesetzt wurde. Die Konzentration des Harzes betrug 76%. Als Härter wurden 0,20% Ameisensäure, als Emulgator 3% des Alkylsulfonats aus Beispiel 1 zusammen mit 0,3% eines niedrig äthoxylierten gesättigten Fettalkohols und als Treibmittel 23% n-Hexan verwendet. Die Massetemperatur beim Schäumen betrug 69,0°C. Der Schaum wurde wie in Beispiel 1 getempert.

## Beispiel 7

Auf ein kontinuierlich laufendes Metallband wurde die homogene Mischung des Beispiels 1 aufgetragen. Das Band lief mit einer Geschwindigkeit von 0,4 [m · min$^{-1}$]. Es war auf etwa 130°C beheizt. Die Mischung wurde auf dem Band mit Hilfe eines Rakels auf eine Schichtdicke von etwa 2 mm gleichmäßig verteilt. In einem mit 150°C heißer Luft beheizten Schäumkanal wurde die Mischung verschäumt, wobei sich eine Massetemperatur von 37,0°C einstellte. Nach etwa 4 1/2 Minuten waren 80% der endgültigen Steighöhe des Schaums und nach etwa 6 Minuten war die endgültige Schaumdicke von 15 cm erreicht. Anschließend wurde der Schaum weitere 7 Minuten lang durch den Schäumkanal geführt, wobei die Massetemperatur auf etwa 98°C anstieg. Der Schaumstoff wurde noch 15 Minuten lang bei einer Massetemperatur von etwa 170°C getempert und anschließend besäumt.

### Beispiel 8

Es wurde wie in Beispiel 6 gearbeitet, wobei ein Harz mit einem Molverhältnis Melamin : Formaldehyd von 1 : 2,0 eingesetzt wurde. Die Konzentration des Harzes betrug 80%. Als Härter wurden 2,5% Ameisensäure, als Emulgator ein Gemisch aus 0,6% diisobutylnaphthalinsulfonsaures Natrium und 1,6% eines niedrig äthoxylierten gesättigten Fettalkohols und als Treibmittel 16% Pentan verwendet.

### Beispiel 9

Es wurde wie in Beispiel 1 gearbeitet, wobei als Säure 1,8% Ameisensäure und als Emulgator 2,2% Natriumdodecylbenzolsulfonat eingesetzt wurden. Die Temperung wurde bei 190"C durchgeführt.

Tabelle

| Bei-spiel | Roh-dichte $[g \cdot l^{-1}]$ | Wärme-leitzahl $[W \cdot m^{-1} \cdot °K^{-1}]$ | Stauch-härte $[N \cdot cm^{-2}]$ | Stauch-härte Roh-dichte | Wieder-erholung % | Elasti-zitäts-modul $[N \cdot mm^{-2}]$ | E-Modul Roh-dichte | Biege-weg [mm] | Zug-festig-keit $[N \cdot mm^{-2}]$ | Brandverhalten | Steg-länge Steg-dicke | Steg-dichte $[g \cdot cm^{\ 3}]$ |
|---|---|---|---|---|---|---|---|---|---|---|---|---|
| 1 | 13 | 0,0325 | 1,3 | 0,10 | > 90 | < 1,0 | 0,08 | > 20 | 0,12 | schwerentflammbar | > 15 | > 1,3 |
| 2 | 20 | 0,032 | 3,0 | 0,15 | > 90 | 2,0 | 0,10 | 15 | 0,12 | schwerentflammbar | > 10 | > 1,3 |
| 3 | 30 | 0,033 | 5,5 | 0,18 | > 90 | 3,5 | 0,12 | 11 | 0,12 | schwerentflammbar | > 10 | > 1,3 |
| 4 | 28 | 0,033 | 5,0 | 0,18 | > 90 | 3,0 | 0,11 | > 12 | 0,10 | schwerentflammbar | > 10 | > 1,3 |
| 5 | 13 | 0,034 | 1,2 | 0,09 | > 90 | < 1,0 | 0,08 | > 20 | 0,11 | schwerentflammbar | > 12 | > 1,3 |
| 6 | 14 | 0,034 | 1,3 | 0,09 | > 90 | 1,0 | 0,07 | > 20 | 0,12 | schwerentflammbar | > 12 | > 1,3 |
| 7 | 12 | 0,032 | 1,2 | 0,10 | > 90 | < 1,0 | 0,085 | 23 | 0,13 | schwerentflammbar | > 15 | > 1,3 |
| 8 | 17 | 0,034 | 1,3 | 0,08 | > 90 | 2,5 | 0,15 | 10 | 0,07 | schwerentflammbar | > 10 | > 1,3 |
| 9 | 12 | 0,036 | 2,2 | 0,18 | > 90 | 1,0 | 0,085 | 20 | 0,07 | schwerentflammbar | > 25 | > 1,3 |

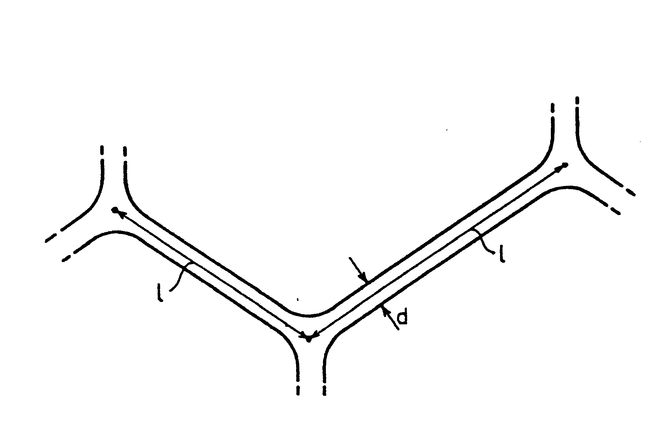

**Patentanspruch**

Elastische, offenzellige Schaumstoffe auf Basis eines Melamin/Formaldehyd-Kondensationsproduktes, welches mindestens 50 Gew.-% Melamin und Formaldehyd-Einheiten einkondensiert enthält, und bis zu 50 Gew.-% andere amino-, amid-, hydroxyl- oder carboxylgruppenhaltige Duroplastbildner einerseits und Aldehyde andererseits einkondensiert enthalten kann, dadurch gekennzeichnet, daß ihr Schaumgerüst aus einer Vielzahl miteinander verbundener dreidimensional verzweigter Stege besteht, deren mittleres Länge : Dicke-Verhältnis größer ist als 10 : 1 und deren Dichte größer ist als 1,1 $g \cdot cm^{-3}$.

**Claim**

A resilient, open-celled foam based on a melamine/formaldehyde condensate which contains at least 50% by weight of condensed units of melamine and formaldehyde, and may contain up to 50% by weight of condensed units of (a) other compounds which form thermosetting resins and contain amine, amide, hydroxyl or carboxyl groups, and (b) aldehydes, wherein its foam structure consists of a three-dimensional network of a large number of struts whose mean length/thickness ratio is higher than 10 : 1, and whose density is greater than 1.1 $g \cdot cm^{-3}$.

**Revendication**

Matière alvéolaire élastique, à cellules ouvertes, à base d'un produit de condensation mélamine-formaldéhyde, qui contient, condensés, au moins 50% en poids de motifs mélamine-formaldéhyde, et qui peut contenir, condensés, jusqu'à 50% en poids d'autres formateurs de thermodurcissables à groupes amino, amide, hydroxyle ou carboxyle, d'une part, et des aldéhydes, d'autre part, caractérisée par le fait que sa structure alvéolaire est constituée par une pluralité de nervures ramifiées tridimensionnellement, reliées entre elles, d'un rapport moyen, longueur/épaisseur, supérieur à 10/1 et de densité supérieure à 1,1 $g \cdot cm^{-3}$.